(19) **Europäisches Patentamt / European Patent Office / Office européen des brevets**

(11) **EP 4 072 813 B1**

(12) **EUROPÄISCHE PATENTSCHRIFT**

(45) Veröffentlichungstag und Bekanntmachung des Hinweises auf die Patenterteilung:
**10.12.2025 Patentblatt 2025/50**

(21) Anmeldenummer: **20800587.6**

(22) Anmeldetag: **27.10.2020**

(51) Internationale Patentklassifikation (IPC):
*B29B 17/02* (2006.01)   *B29B 7/74* (2006.01)
*B29B 9/02* (2006.01)   *B29B 9/16* (2006.01)
*B29B 17/04* (2006.01)   *B29C 48/00* (2019.01)
*B29C 48/07* (2019.01)   *B29C 48/305* (2019.01)
*B29C 48/385* (2019.01)   *B29C 48/69* (2019.01)

(52) Gemeinsame Patentklassifikation (CPC):
**B29B 17/02; B29B 7/66; B29B 7/748;**
**B29B 7/7495; B29B 9/02; B29B 9/16; B29B 17/04;**
**B29C 48/022; B29C 48/375; B29C 48/875;**
B29B 7/46; B29B 7/72; B29B 2017/0224;
B29B 2017/0464; B29B 2017/0484;   (Forts.)

(86) Internationale Anmeldenummer:
**PCT/EP2020/080143**

(87) Internationale Veröffentlichungsnummer:
**WO 2021/115678 (17.06.2021 Gazette 2021/24)**

(54) **VERFAHREN ZUR DEVULKANISATION EINER VULKANISIERTEN KAUTSCHUKMISCHUNG SOWIE VERFAHREN ZUR BEREITSTELLUNG UND VERWENDUNG EINER KAUTSCHUKMISCHUNG**

METHOD OF DEVULCANIZING A VULCANIZED RUBBER COMPOUND AND METHOD OF PREPARING AND USING A RUBBER COMPOUND

PROCÉDÉ DE DÉVULCANISATION D'UNE COMPOSITION DE CAOUTCHOUC VULCANISÉ ET PROCÉDÉ DE PRÉPARATION ET D'UTILISATION D'UNE COMPOSITION DE CAOUTCHOUC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2019 DE 102019219372**

(43) Veröffentlichungstag der Anmeldung:
**19.10.2022 Patentblatt 2022/42**

(73) Patentinhaber: **Continental Reifen Deutschland GmbH**
**30175 Hannover (DE)**

(72) Erfinder:
• **EFIMOV, Konstantin**
**30165 Hannover (DE)**
• **KRÜGER, Nils**
**30165 Hannover (DE)**
• **NAIK, Shreyas**
**30165 Hannover (DE)**
• **SOETBEER, Inga**
**30165 Hannover (DE)**
• **VÖLKER, Thomas**
**30165 Hannover (DE)**
• **WOLF, Hilke**
**30165 Hannover (DE)**

(74) Vertreter: **Continental Corporation**
**c/o Continental Reifen Deutschland GmbH**
**Intellectual Property Tires**
**Continental-Plaza 1**
**30175 Hannover (DE)**

(56) Entgegenhaltungen:
EP-A1- 2 601 249    EP-B1- 2 601 249
CN-A- 102 344 592    CN-A- 108 822 337
DE-A1- 102015 224 957    US-A1- 2018 251 624
US-B2- 7 189 762

- **E GRÜNSCHLOSS: "4/01/2021 Screw Channel -an overview | ScienceDirect Topics Polymer Single Screw Extrusion: Modeling 3 Modeling the Solids Conveying Zone", ENCYCLOPEDIA OF MATERIALS: SCIENCE AND TECHNOLOGY, 1 January 2001 (2001-01-01), XP055765239, Retrieved from the Internet <URL:https://www.sciencedirect.com/topics/engineering/screw-channel#:~:text=To%20calculate%20the%20shear%20rates,flight%20and%20the%20barrel%20wall.&text=(8.4)-,where%20%CF%84%20%3D%20Shear%20stress%20%3D%20F%2FA%20%3D%20Force%20applied,is%20shown%20in%20Figure%208.1.>**

(52) Gemeinsame Patentklassifikation (CPC): (Forts.)
B29C 48/03; B29C 48/38; B29C 48/385;
B29C 48/387; B29C 48/40; B29K 2021/00;
B29K 2105/24; B29K 2105/246; Y02W 30/52;
Y02W 30/62

**Beschreibung**

Die Erfindung betrifft ein Verfahren zur Devulkanisation einer vulkanisierten Kautschukmischung.

Die Beschreibung offenbart zusätzlich auch eine nicht separat beanspruchte Vorrichtung zur Durchführung des Verfahrens und die Verwendung der Vorrichtung zur Devulkanisation einer vulkanisierten Kautschukmischung.

Wie in den meisten Industrien, ist auch die Kautschukindustrie angehalten, möglichst wenig Materialien aus neuen Rohstoffen, insbesondere fossilen Rohstoffen, bei der Herstellung von technischen Gummiartikeln zu verwenden und insbesondere Materialien wiederzuverwenden.

Einer der bisherigen Ansätze zur Wiederverwertung von altem Kautschuk oder Altgummi ist das Devulkanisieren von bereits vulkanisiertem Kautschuk. Bei einer solchen Devulkanisation wird die Vernetzung zwischen den Kautschukpolymeren im Gummi, welche meist aus Schwefel-Schwefelverbindungen bestehen, getrennt, um anschließend die "entnetzten" Kautschukpolymere wieder zu vernetzen und somit unter Zugabe weiterer Mischungsbestandteile eine Kautschukmischung zu erhalten, welche die gleichen Eigenschaften hat wie eine frisch hergestellte Kautschukmischung aus neuen fossilen oder erneuerbaren Rohstoffen.

Im Stand der Technik sind verschiedene Verfahren zum Devulkanisieren bekannt:
CN 105729755 offenbart einen mehrstufigen Prozess zur Herstellung von Spritzgussformen aus Schraubgummi, der folgende Schritte umfasst: Gummi-Pulver zu einer Fütterungsmaschine hinzugeben und die Fütterungsmenge der Einspeisung in die Doppelschnecke in der ersten Stufe steuern, die Schraube und der Extruderzylinder werden erhitzt, und das Gummipulver wird mit einem heißen Zylinder und einer heißen Schraube extrudiert (vgl. Anspruch 1).

CN 102250381 B offenbart eine zweischraubige Entschwefelungsanlage für Gummi, bestehend aus: einem Zylinderkörper, einer Doppelschnecke und einer Heizvorrichtung im Zylinderkörper, der Zylinderkörper mit einem Vorschubanschluss, die Doppelschnecke mit einem Förderteil und mit zwei oder mehr Scherbereichen, die untereinander getrennt sind, und ein Schneckenübergangsteil und ein Mischteil zwischen zwei benachbarten Scherbereichen (vgl. Anspruch 1).

US 2015148435 offenbart ein Verfahren zur Entvulkanisierung eines vulkanisierten Kautschuks, das folgende Schritte umfasst:

a) mindestens einen vulkanisierten Kautschuk zur Verfügung stellen;
b) Zermahlen des vulkanisierten Kautschuks in Aggregate;
c) das aus Schritt b) gewonnene gemahlene Gummi in niedriger Schergeschwindigkeit zwischen 100 1/s und 500 1/s so zu kneten, dass es in der Größe der Aggregate und in der Temperatur homogenisiert wird;
d) Erzielung einer nicht degenerierenden mechanischen Behandlung auf dem aus Schritt c) gewonnenen gekneteten Kautschuk, wobei eine hohe Schergeschwindigkeit zwischen 1 000 1/s und 1 000 000 1/s angewendet wird (vgl. Anspruch 1).

EP 1201390 offenbart ein Verfahren zur Devulkanisation von vernetztem Kautschuk, bestehend aus einer Reclaim-Stufe aus vernetztem Kautschuk, indem Scherungsspannung auf den vernetzten Kautschuk aufgebracht wird, wobei der Höchstdruck in der Reclaim-Stufe 1,5 MPa oder mehr beträgt (vgl. Anspruch 1).

Als Stand der Technik bezüglich Vorrichtungen und Verfahren zur Herstellung regenerierten Gummis aus durch Devulkanisation erhaltenen modifizierten Kautschukmischungen sind weiterhin die CN 102 344 592 A, die US 7 189 762 B2, die DE 10 2015 224957 A1, die CN 108 822 337 A, die US 2018/251624 A1 und die EP 2 601 249 A1 zu nennen.

Im Stand der Technik, unter anderem einigen der vorstehend beschriebenen Dokumente, tritt das Problem auf, dass nicht nur die Schwefel-Schwefelverbindungen zwischen den Kautschukpolymeren getrennt werden, sondern auch die Polymerketten, was zu einer Verkürzung der durchschnittlichen Kettenlänge der Kautschukpolymere führt. Dies führte zu einer schlechteren Qualität der aus diesen Kautschukmischungen entstehenden Reifen und sollte demnach verhindert werden.

Eine Aufgabe, die der Erfindung zugrunde liegt, besteht darin, ein Verfahren zur Devulkanisation einer vulkanisierten Kautschukmischung bereitzustellen, bei dem eine devulkanisierte Kautschukmischung mit verbesserten Eigenschaften und/oder weniger verkürzten Kautschukpolymerketten entsteht.

Der Umfang der Erfindung wird durch die Ansprüche festgelegt.

Gelöst wird diese Aufgabe erfindungsgemäß durch ein Verfahren zur Devulkanisation einer vulkanisierten Kautschukmischung, umfassend die folgenden Schritte

A) Bereitstellen oder Herstellen einer vulkanisierten Kautschukmischung,
B) Zerkleinern der vulkanisierten Kautschukmischung in ein Granulat aus vulkanisierten Kautschukpartikeln, wobei die vulkanisierten Kautschukpartikeln einen maximalen Partikeldurchmesser von 100 mm aufweisen,
C) Extrudieren der in Schritt B) hergestellten vulkanisierten Kautschukpartikel in einem Zweischneckenextruder mit einer Schergeschwindigkeit von weniger als 100 s$^{-1}$, wobei die Temperatur der vulkanisierten Kautschukpartikel während des Extrudierens kleiner ist als 200 °C und eine devulkanisierte Kautschukmischung mit einer Temperatur von über 100 °C entsteht,

D) Abkühlen der devulkanisierten Kautschukmischung in einer weiteren Kneteinheit, sodass eine devulkanisierte Kautschukmischung mit einer Temperatur im Bereich von 50 °C bis 100 °C entsteht.

Es ist eine große Leistung der vorliegenden Erfindung herausgefunden zu haben, dass durch die Kombination von einem Zweischneckenextruder mit einem Einschneckenextruder und/oder einer Zahnradpumpe vulkanisierte Kautschukpartikel devulkanisiert werden können, ohne dabei eine Verkürzung der Polymerketten der Kautschukmoleküle wie aus dem Stand der Technik berichtet zu beobachten. Ohne an eine wissenschaftliche Theorie gebunden sein zu wollen, scheint die geringere Verkürzung der Polymerketten aus der Einhaltung des vorstehenden Temperaturprogramms in Schritt C) und Schritt D) des erfindungsgemäßen Verfahrens sowie der Einhaltung der geringen Schergeschwindigkeit im Zweischneckenextruder zu resultieren.

Mittels des vorstehenden erfindungsgemäßen Verfahrens erhaltene devulkanisierte Kautschukmischungen weisen bessere Eigenschaften und insbesondere längere Polymerketten auf, welche insbesondere durch eine Verbesserung der Messwerte bei der Mooney-Viskosität, der Shore-Härte, der Rückprallelastizität und bei dem Modul 300 angezeigt werden.

Bevorzugt ist es im Rahmen der Erfindung, dass der Zweischnecken-Extruder ein korotierender Zweischneckenextruder ist und die in der weitere Kneteinheit erreichten Scherkräfte gleich oder geringer sind als die maximal erreichten Scherkräfte, welche in Schritt C) im Zweischneckenextruder erreicht werden.

Im Rahmen der vorliegenden Erfindung bedeutet der Ausdruck "in einem Extruder mit einer Schergeschwindigkeit im Bereich von X bis Y", dass die Schergeschwindigkeit über alle Schneckensegmente des Extruders im Bereich von X bis Y liegt. Im Rahmen der vorliegenden Erfindung wird die Schergeschwindigkeit eines Schneckensegments eines Extruders mittels der nachstehenden Formel berechnet:

$$\text{Schergeschwindigkeit} = v/h \qquad \text{(Formel 1),}$$

wobei:

$v = 2\pi$ x (Rotationsgeschwindigkeit der Schnecke [1/s]) x (Abstand zwischen der Schneckenrotationsachse und dem radial äußersten Punkt des betrachteten Schneckenelements [mm]);

$h$ = Abstand in einem zur Schneckenrotationsachse senkrecht verlaufenden Querschnitt zwischen der Innenfläche des Extrusionszylinders und der Außenfläche des Schneckenkerns [mm].

Im Rahmen der vorliegenden Erfindung bedeutet der Ausdruck "devulkanisiert", dass die prozessierte, also devulkanisiete Kautschukmischung weniger Schwefel-Schwefelbindungen aufweist als die unprozessierte, also nichtdevulkanisierte Kautschukmischung.

Bevorzugt ist ein Verfahren wie vorstehend beschrieben oder wie vorstehend als bevorzugt beschrieben, wobei die weitere Kneteinheit in Schritt D) einen Einschneckenextruder und/oder eine Zahnradpumpe umfasst.

Ein Vorteil des vorstehend beschriebenen Aspekts der vorliegenden Erfindung ist, dass ein Einschneckenextruder und/oder eine Zahnradpumpe eine ausgezeichnete Temperaturkontrolle der extrudierten Kautschukmischung ermöglicht und somit noch besser gewährleistet werden kann, dass die Temperaturen in Schritt C) und Schritt D) eines erfindungsgemäßen Verfahrens eingehalten werden können.

Besonders bevorzugt ist die weitere Kneteinheit zwischen dem Zweischnecken-Extruder und einer nachstehend beschriebenen Filtereinheit angeordnet, da auf diese Weise gewährleistet werden kann, dass genug Vorschub für die Kautschukmischung erreicht werden kann, um die devulkanisierte Kautschukmischung durch die Filtereinheit zu drücken.

Es ist jedoch auch möglich, anstelle des Einschneckenextruders in der weiteren Kneteinheit eine so genannte Materialschlaufe zu verwenden, wobei die im Zweischneckenextruder devulkanisierte Kautschukmischung am Ende des Zweischnecken-Extruders durch eine Düse in einen Kautschukstrang gepresst wird und dieser Kautschukstrang für eine vordefinierte Zeit mittels der Umgebungstemperatur auf eine Zieltemperatur abgekühlt wird, bevor der so extrudierte Kautschukstrang anschließend in die Zahnradpumpe geführt wird. Dies ermöglicht eine bessere Temperaturkontrolle und insbesondere ein schnelleres Anpassen der Abkühlzeit bei der Umstellung auf eine neue Kautschukmischung mit einer anderen Zusammensetzung.

Solche Schlaufeneinheiten zum Bilden einer Materialschlaufe und zum Einstellen der Länge der Materialschlaufe, auch Zwischenspeicher für ein Kautschukmischungsband genannt, sind beispielsweise in der Offenlegungsschrift DE 102017216544 A1 bekannt (s. dort Absatz [0013]).

Bevorzugt ist ein Verfahren wie vorstehend beschrieben oder wie vorstehend als bevorzugt beschrieben, wobei während des Extrudierens in Schritt C) ein spezifischer Energieeintrag von 0,01 bis 5 kWh/kg je Schnecke in die vulkanisierten Kautschukpartikel eingetragen wird, bezogen auf die Gesamtmasse der in Schritt C) extrudierten vulkanisierten Kautschukpartikel, bevorzugt 0,1 bis 2,5 kWh/kg je Schnecke.

Ein Vorteil des vorstehend beschriebenen Aspekts der vorliegenden Erfindung ist, dass mit den vorstehend beschriebenen Energieeinträgen besonders fließfähige Mischungen erreicht werden können, weil eine möglichst große Anzahl an Schwefel-Schwefelverbindungen und eine möglichst geringe Anzahl an Polymerketten zerstört werden.

Erfindungsgemäß umfasst das Verfahren wie vorstehend beschrieben oder wie vorstehend als bevorzugt beschrieben weiterhin einen Schritt, wobei zeitlich nach dem in der weiteren Kneteinheit stattfindenden Abkühlen in Schritt D) die devulkanisierte Kautschukmischung in einem Schritt E),

- auf eine Temperatur von 100°C bis 150 °C, erwärmt wird,
  und optional
- durch eine Filtereinheit umfassend ein Sieb und/oder eine Lochplatte gedrückt wird, wobei die devulkanisierte Kautschukmischung bevorzugt aufgrund des Drückens durch die Filtereinheit eine Temperatur von 50 °C bis 150 °C erwärmt wird, bevorzugt von 100°C bis 150 °C.

Ein Vorteil des vorstehend beschriebenen Aspekts der vorliegenden Erfindung ist, dass sich Kautschukmischungen, welche nach dem vorstehend beschriebenen Aspekt devulkanisiert wurden, besonders schnell mit anderen Kautschukmischungen vermischen lassen und somit den anschließenden Herstellungsprozess erleichtern.

Bevorzugt ist ein Verfahren wie vorstehend beschrieben oder wie vorstehend als bevorzugt beschrieben, wobei der Zweischneckenextruder in Schritt C) eine Länge von weniger als 60D aufweist.

Ein Vorteil des vorstehend beschriebenen Aspekts der vorliegenden Erfindung ist, dass die Polymerketten der Kautschukmoleküle nicht kürzer werden, als bei anderen Zweischnecken-Extrudern. Dies kann man an den vorstehend beschriebenen Eigenschaften der entstehende Kautschukmischung oder des anschließend aus dieser Kautschukmischung erhaltenen Vulkanisats messen.

Bevorzugt ist ein Verfahren wie vorstehend beschrieben oder wie vorstehend als bevorzugt beschrieben, wobei während des Extrudierens in Schritt C) ein Mittel zum Temperieren der extrudierten Kautschukpartikel den extrudierten Kautschukpartikeln in den Zweischneckenextruder hinzugefügt wird.

Ein Vorteil des vorstehend beschriebenen Aspekts der vorliegenden Erfindung ist, dass die Polymerketten der Kautschukmoleküle aufgrund der niedrigeren Temperatur durch das Zuführen des Mittels zum Temperieren nicht kürzer werden. Dies kann man an den vorstehend beschriebenen Eigenschaften der entstehende Kautschukmischung oder des anschließend aus dieser Kautschukmischung erhaltenen Vulkanisats messen.

Ein Beispiel eines solchen Mittels zum Temperieren ist jedes bekannte Prozessöl, welches mit Kautschukmischungen vermischt werden kann. Bevorzugt ist das Mittel zum Temperieren Sonnenblumenöl.

Bevorzugt ist ein Verfahren wie vorstehend beschrieben oder wie vorstehend als bevorzugt beschrieben, wobei während des Extrudieren in Schritt C) das Mittel zum Temperieren der extrudierten Kautschukpartikel einen spezifischen Wärmeübergangskoeffizienten nach EN ISO 6946 im Bereich von 100 bis 5000 $W/(m^2*K)$ und/oder der spezifischen Wärmekapazität im Bereich von 3 bis 5 kJ/(kg·K) aufweist.

Ein Vorteil des vorstehend beschriebenen Aspekts der vorliegenden Erfindung ist, dass sich solche Mittel zum Temperieren besonders gut für ein erfindungsgemäßes Verfahren eignen.

Bevorzugt ist ein Verfahren wie vorstehend beschrieben oder wie vorstehend als bevorzugt beschrieben, wobei während des Extrudierens in Schritt C) die Schneckendrehzahl der Schnecken des Zweischneckenextruders hauptsächlich im Bereich von 10 bis 500 Umdrehung pro Minute liegt, bevorzugt im Bereich von 100 bis 300 Umdrehung pro Minute.

Ein Vorteil des vorstehend beschriebenen Aspekts der vorliegenden Erfindung ist, dass die Polymerketten der Kautschukmoleküle aufgrund der niedrigeren Umdrehung pro Minute nicht kürzer werden, als bei anderen Drehzahleinstellungen. Dies kann man an den vorstehend beschriebenen Eigenschaften der entstehende Kautschukmischung oder des anschließend aus dieser Kautschukmischung erhaltenen Vulkanisats messen.

Bevorzugt ist ein Verfahren wie vorstehend beschrieben oder wie vorstehend als bevorzugt beschrieben, wobei während des Extrudierens in Schritt C) das Mittel zum Temperieren der extrudierten Kautschukpartikel chemisch nicht im Temperaturbereich zwischen 10 °C und 200 °C mit den Kautschukpartikeln reagiert und/oder ausgesucht ist aus der Gruppe bestehend aus mineralischen Ölen und wasserbasierten Verarbeitungshilfsmittel. Besonders bevorzugte wasserbasierte Verarbeitungshilfsmittel sind die in der Kautschukindustrie üblichen Verarbeitungshilfsmittel in wässriger Lösung oder in Emulsion mit Wasser.

Ein Vorteil des vorstehend beschriebenen Aspekts der vorliegenden Erfindung ist, dass sich solche Mittel zum Temperieren besonders gut für ein erfindungsgemäßes Verfahren eignen.

Bevorzugt ist ein Verfahren wie vorstehend beschrieben oder wie vorstehend als bevorzugt beschrieben, wobei der Schritt D) in einem Zeitraum von 0,001 bis 3 h durchgeführt wird, bevorzugt in einem Zeitraum von 0,01 bis 1 h, besonders bevorzugt in einem Zeitraum von 00,2 bis 0,5 h.

Im Rahmen der vorliegenden Erfindung beginnt der Schritt D), wenn die devulkanisierte Kautschukmischung den Zweischneckenextruder verlässt, und endet, wenn die devulkanisierte Kautschukmischung die Kneteinheit, insbesondere die Zahnradpumpe, verlässt.

Bevorzugt ist ein Verfahren wie vorstehend beschrieben oder wie vorstehend als bevorzugt beschrieben, wobei die in Schritt B) hergestellten vulkanisierten Kautschukpartikel in Schritt C) in dem Zweischneckenextruder mit einer Schergeschwindigkeit im Bereich von 10 bis 80 s$^{-1}$ extrudiert werden.

Ein Vorteil des vorstehend beschriebenen Aspekts der vorliegenden Erfindung ist, dass die Polymerketten der Kautschukmoleküle aufgrund der niedrigeren Schergeschwindigkeit nicht kürzer werden, als bei anderen Zweischnecken-Extrudern. Dies kann man an den vorstehend beschriebenen Eigenschaften der entstehende Kautschukmischung oder des anschließend aus dieser Kautschukmischung erhaltenen Vulkanisats messen.

Bevorzugt ist ein Verfahren wie vorstehend beschrieben oder wie vorstehend als bevorzugt beschrieben, wobei die Temperatur der vulkanisierten Kautschukpartikel während des Extrudierens in Schritt C) im Bereich von 105 bis 180 °C liegt, bevorzugt im Bereich von 110 bis 150 °C.

Ein Vorteil des vorstehend beschriebenen Aspekts der vorliegenden Erfindung ist, dass die Polymerketten der Kautschukmoleküle aufgrund der niedrigeren Temperatur nicht kürzer werden. Dies kann man an den vorstehend beschriebenen Eigenschaften der entstehende Kautschukmischung oder des anschließend aus dieser Kautschukmischung erhaltenen Vulkanisats messen.

Bevorzugt ist ein Verfahren wie vorstehend beschrieben oder wie vorstehend als bevorzugt beschrieben, wobei die in Schritt C) resultierende devulkanisierte Kautschukmischung eine Temperatur im Bereich von 90 bis unter 150 °C aufweist, bevorzugt im Bereich von 120 bis unter 150 °C.

Ein Vorteil des vorstehend beschriebenen Aspekts der vorliegenden Erfindung ist, dass aufgrund der beiden vorstehend beschriebenen Aspekte der vorliegenden Erfindung ist es erfindungsgemäß bevorzugt, wenn die Kautschukmischung Zweischnecken-Extruder und/oder in der weitere Kneteinheit zusätzlich mittels im Extruderzylinder eingebauten Kühlelementen temperiert werden kann.

Bevorzugt ist ein Verfahren wie vorstehend beschrieben oder wie vorstehend als bevorzugt beschrieben, wobei der Anteil der in Schritt B) resultierenden zerkleinerten vulkanisierten Kautschukpartikel, welcher bei einem Siebtest nach dem japanischen Industriestandards JIS P-8207 durch ein Sieb von 44 Mesh tritt, mindestens 50 Gew.-% der Gesamtmasse an in Schritt B) resultierenden zerkleinerten Kautschukpartikel umfasst, bevorzugt mindestens 80 Gew.-% der Gesamtmasse an in Schritt B) resultierenden zerkleinerten Kautschukpartikel.

Ein Vorteil des vorstehend beschriebenen Aspekts der vorliegenden Erfindung ist, dass sich solche vulkanisierten Kautschukpartikel besonders schnell devulkanisieren lassen und/oder besonders fließfähige devulkanisierte Mischungen entstehen.

Bevorzugt ist ein Verfahren wie vorstehend beschrieben oder wie vorstehend als bevorzugt beschrieben, wobei die in Schritt D) abgekühlte Kautschukmischung mit weiterem Kautschukmischungsbestandteilen zu einer unvulkanisierten frischen Kautschukmischung vermischt wird, wobei die weiteren Kautschukmischungsbestandteile ausgesucht sind aus der Gruppe bestehend aus natürlichem und/oder synthetischen Kautschuk, Butadien-Kautschuk, Styrol-Butadien-Kautschuk, Füllstoffe, Weichmacher, Alterungsschutzmittel und Vulkanisationsmittel.

Bevorzugt ist ein Verfahren wie vorstehend beschrieben oder wie vorstehend als bevorzugt beschrieben, wobei der durchschnittliche Partikeldurchmesser der in Schritt B) resultierenden Kautschukpartikel im Bereich von 0,01 mm bis 50 mm liegt, bevorzugt im Bereich von 0,1 mm bis 20 mm.

Ein Vorteil des vorstehend beschriebenen Aspekts der vorliegenden Erfindung ist, dass sich solche vulkanisierten Kautschukpartikel besonders schnell devulkanisieren lassen und/oder besonders fließfähige devulkanisierte Mischungen entstehen.

Bevorzugt ist ein Verfahren wie vorstehend beschrieben oder wie vorstehend als bevorzugt beschrieben, wobei die in Schritt A) her- oder bereitgestellte Kautschukmischung aus natürlichem Kautschuk, Butadienkautschuk und/oder SBR-Kautschuk besteht, wobei in der in Schritt A) her- oder bereitgestellte Kautschukmischung bevorzugt 50 phr bis 100 phr eines natürlichen Kautschuks vorliegen.

Ein Vorteil des vorstehend beschriebenen Aspekts der vorliegenden Erfindung ist, dass insbesondere Kautschukmischungen mit einem hohen Anteil an natürlichen Kautschuk wiedergewonnen werden sollten, damit weniger natürliche erneuerbare Ressourcen verwendet werden müssen, ohne dass zu hohe Temperaturen und Drücke die Polymerketten des natürlichen Kautschuks verkürzen würden.

Bevorzugt ist ein Verfahren wie vorstehend beschrieben oder wie vorstehend als bevorzugt beschrieben, wobei die in Schritt A) her- oder bereitgestellte Kautschukmischung einen Füllstoff, bevorzugt Ruß, umfasst, wobei der Füllstoff bevorzugt in einer Menge von 10 bis 150 phr, besonders bevorzugt in einer Menge von 70 bis 150 phr vorliegt.

Ein Vorteil des vorstehend beschriebenen Aspekts der vorliegenden Erfindung ist, dass insbesondere Kautschukmischungen mit einem hohen Anteil an natürlichen Kautschuk wiedergewonnen werden sollten, damit insbesondere weniger fossile Ressourcen, d.h. Ruß, verwendet werden müssen.

In besonders hohem Maße bevorzugt ist ein Verfahren wie vorstehend beschrieben umfassend die folgenden Schritte:

A) Bereitstellen oder Herstellen einer vulkanisierten Kautschukmischung

B) Zerkleinern der vulkanisierten Kautschukmischung in ein Granulat aus vulkanisierten Kautschukpartikeln, wobei die vulkanisierten Kautschukpartikeln einen maximalen Partikeldurchmesser von 10 mm aufweisen,

C) Extrudieren der in Schritt B) hergestellten vulkanisierten Kautschukpartikel in einem korotierenden Zweischneckenextruder mit einer Schergeschwindigkeit im Bereich von 10 bis 80 s$^{-1}$, wobei die Temperatur der vulkanisierten Kautschukpartikel während des Extrudierens kleiner ist als 200 °C und eine devulkanisierte Kautschukmischung mit einer Temperatur von über 100 °C entsteht,

D) Abkühlen der devulkanisierten Kautschukmischung in einer weiteren Kneteinheit, sodass eine devulkanisierten Kautschukmischung mit einer Temperatur im Bereich von 50 °C bis 100 °C entsteht,

wobei

- die weitere Kneteinheit in Schritt D) einen Einschneckenextruder und eine Zahnradpumpe umfasst,
- während des Extrudierens in Schritt C) ein spezifischer Energieeintrag von 0,1 bis 2,5 kWh/kg je Schnecke in die vulkanisierten Kautschukpartikel eingetragen wird, bezogen auf die Gesamtmasse der in Schritt C) extrudierten vulkanisierten Kautschukpartikel,
- die devulkanisierte Kautschukmischung zeitlich nach dem Abkühlen in der weiteren Kneteinheit in Schritt D) in einem Schritt E) durch eine Filtereinheit umfassend ein Sieb und/oder eine Lochplatte gedrückt wird, wobei die devulkanisierte Kautschukmischung aufgrund des Drückens durch die Filtereinheit auf eine Temperatur von 100 °C bis 150 °C erwärmt wird,
- der Zweischneckenextruder in Schritt C) eine Länge von weniger als 60D aufweist,
- während des Extrudieren in Schritt C) das Mittel zum Temperieren der extrudierten Kautschukpartikel einen spezifischen Wärmeübergangskoeffizienten nach EN ISO 6946 im Bereich von 100 bis 5000 W/(m$^2$*K) und/oder der spezifischen Wärmekapazität im Bereich von 3 bis 5 kJ/(kg·K) aufweist,
- während des Extrudierens in Schritt C) die Schneckendrehzahl der Schnecken des Zweischneckenextruders hauptsächlich im Bereich von 100 bis 300 Umdrehung pro Minute liegt,
- während des Extrudierens in Schritt C) das Mittel zum Temperieren der extrudierten Kautschukpartikel chemisch nicht im Temperaturbereich zwischen 10 °C und 200 °C mit den Kautschukpartikeln reagiert,
- die Temperatur der vulkanisierten Kautschukpartikel während des Extrudierens in Schritt C) im Bereich von 110 bis 150 °C liegt,
- der Anteil der in Schritt B) resultierenden zerkleinerten Kautschukpartikel, welcher bei einem Siebtest nach dem japanischen Industriestandards JIS P-8207 durch ein Sieb von 44 Mesh tritt, mindestens 80 Gew.-% der Gesamtmasse an in Schritt B) resultierenden zerkleinerten Kautschukpartikel umfasst,
- die in Schritt A) her- oder bereitgestellte Kautschukmischung aus natürlichem Kautschuk, Butadienkautschuk und/oder SBR-Kautschuk besteht, wobei in der in Schritt A) her- oder bereitgestellte Kautschukmischung 50 phr bis 100 phr eines natürlichen Kautschuks vorliegen
und
- die in Schritt A) her- oder bereitgestellte Kautschukmischung ein Ruß umfasst, wobei der Ruß in einer Menge von 50 bis 150 phr vorliegt.

Die vorstehend beschriebenen vorteilhaften Aspekte eines erfindungsgemäßen Verfahrens zur Devulkanisation einer vulkanisierten Kautschukmischung gelten auch für sämtliche Aspekte einer nachstehend beschriebenen Vorrichtung und die nachstehend diskutierten vorteilhaften Aspekte erfindungsgemäßer Vorrichtungen gelten entsprechend für sämtliche Aspekte eines erfindungsgemäßen Verfahrens zur Devulkanisation einer vulkanisierten Kautschukmischung.

Vorliegend offenbart wird auch eine nicht separat beanspruchte Vorrichtung zur Durchführung eines Verfahrens einem der vorangehenden Ansprüche, umfassend

- einen Zweischneckenextruder, bevorzugt mit einer Länge von weniger als 60D,
- eine weitere Kneteinheit, welche bevorzugt einen Einschneckenextruder und/oder eine Zahnradpumpe umfasst,
- eine Filtereinheit umfassend ein Sieb und/oder eine Lochplatte und optional
- eine Partikelzerkleinerungseinheit zum Zerkleinern einer vulkanisierten Kautschukmischung in ein Granulat aus vulkanisierten Kautschukpartikeln mit einem maximalen Partikeldurchmesser von 100 mm und/oder mit einem durchschnittlichen Partikeldurchmesser im Bereich von 0,1 mm bis 20 mm.

Eine vorstehend beschriebene Partikelzerkleinerungseinheit sind beispielsweise die Produkte "bomatic B1000S" und "bomatic B 1000DD" der Firma " Bomatik" oder das Produkt "Einwellenshredder Typ ZHS 1700" der Firma Amis.

Die vorstehend beschriebenen vorteilhaften Aspekte einer Vorrichtung zur Durchführung eines Verfahrens und eines erfindungsgemäßen Verfahrens zur Devulkanisation einer vulkanisierten Kautschukmischung gelten auch für sämtliche Aspekte des nachstehend beschriebenen Verfahrens zur Bereitstellung und Verwendung einer Kautschukmischung und die nachstehend diskutierten vorteilhaften Aspekte des erfindungsgemäßen Verfahrens zur Bereitstellung und Verwendung einer Kautschukmischung gelten entsprechend für sämtliche Aspekte einer Vorrichtung zur Durchführung eines Verfahrens wie vorstehend beschrieben oder wie vorstehend als bevorzugt beschrieben und eines erfindungsgemäßen Verfahrens zur Devulkanisation einer vulkanisierten Kautschukmischung.

Vorliegend offenbart wird auch eine nicht separat beanspruchte Verwendung einer Vorrichtung wie vorstehend beschrieben oder wie vorstehend als bevorzugt beschrieben zur Devulkanisation einer vulkanisierten Kautschukmischung.

Die Erfindung betrifft auch ein Verfahren zur Bereitstellung und Verwendung einer wie vorstehend beschrieben oder wie vorstehend als bevorzugt beschrieben oder wie vorstehend als besonders bevorzugt beschriebenen devulkanisierten Kautschukmischung zur Herstellung eines technischen Gummiartikels, bevorzugt eines Fahrzeugreifens.

Offenbart wird auch eine nicht separat beanspruchte Verwendung einer mittels der vorstehend beschriebenen oder der vorstehend als bevorzugt beschriebenen erfindungsgemäßen Vorrichtung devulkanisierten Kautschukmischung zur Herstellung eines technischen Gummiartikels, bevorzugt eines Fahrzeugreifens.

**Figurenbeschreibung:**

Es zeigt:

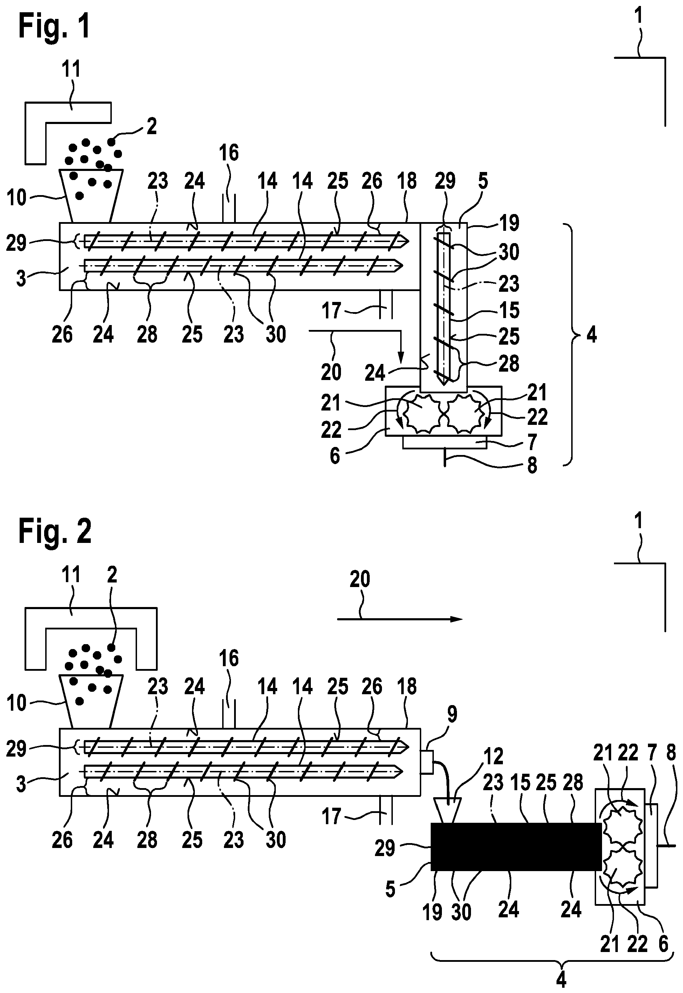

Figur 1: Einen schematischen Querschnitt durch eine Vorrichtung mit einem Zweischneckenextruder, einem Einschneckenextruder und einer Zahnradpumpe sowie einem Strainer mit einem Sieb und einer Lochplatte, wobei die Kautschukmischung vom Zweischnecken-Extruder ohne Düse und ohne einen weiteren Hopper direkt in den Einschneckenextruder überführt wird;

Figur 2: Einen schematischen Querschnitt durch eine Vorrichtung mit einem Zweischneckenextruder, einem Einschneckenextruder und einer Zahnradpumpe sowie einem Strainer mit einem Sieb und einer Lochplatte, wobei die Kautschukmischung vom Zweischnecken-Extruder mit einer Düse und über einen weiteren Hopper in den Einschneckenextruder überführt wird;

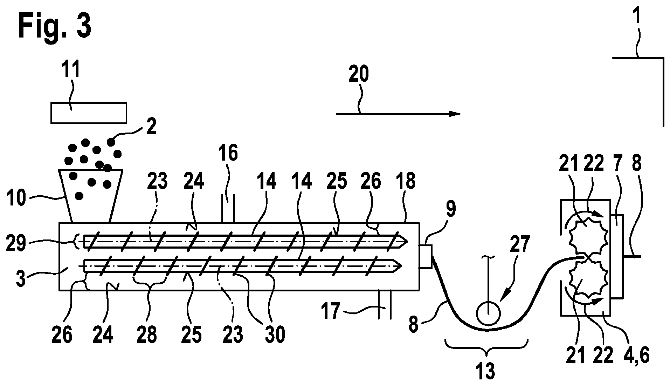

Figur 3: Einen schematischen Querschnitt durch eine Vorrichtung mit einem Zweischneckenextruder, einer Zahnradpumpe sowie einem Strainer mit einem Sieb und einer Lochplatte, wobei die Kautschukmischung vom Zweischneckenextruder mit einer Düse über eine Materialschleife in die Zahnradpumpe überführt wird;

Figur 1 zeigt eine schematische Darstellung einer Vorrichtung 1 in einer ersten Ausführungsform umfassend

- einen Hopper 10 zum Zuführen von vulkanisierten Kautschukpartikeln 2 mit einem maximalen Partikeldurchmesser von 100 mm und mit einem durchschnittlichen Partikeldurchmesser im Bereich von 0,1 mm bis 20 mm in einen Zweischneckenextruder 3,
- einen Zweischneckenextruder 3 mit einer Länge von weniger als 60D,
- eine weitere Kneteinheit 4, welche einen Einschneckenextruder 5 und eine Zahnradpumpe 6 umfasst, und final
- eine Filtereinheit 7 umfassend ein Sieb und/oder eine Lochplatte.

Auch dargestellt in Figur 1 ist die Partikelzerkleinerungseinheit 11 zum Zerkleinern einer vulkanisierten Kautschukmischung in ein Granulat aus vulkanisierten Kautschukpartikeln 2 mit einem maximalen Partikeldurchmesser von 100 mm und mit einem durchschnittlichen Partikeldurchmesser im Bereich von 0,1 mm bis 20 mm, um diese anschließend über den Hopper 10 in den Zweischneckenextruder 3 zuzuführen.

Der Zweischneckenextruder 3 weist einen Zylinder 18 mit einer Innenfläche 24, zwei Schnecken 14 mit je einer Schneckenrotationsachse 23 sowie eine Zu- und Abführeinheit 16, 17 auf. Die Schnecken 14 des Zweischneckenextruder 3 umfasst dabei einen Schneckenkern 29 mit einer Außenfläche 25 und mehrere Schneckensegmente 28 mit Schneckenflügeln 30. Zudem ist der Abstand 26 eingezeichnet, welcher den Parameter h in Formel 1 darstellt.

Der Einschneckenextruder 5 weist einen Zylinder 19 mit einer Innenfläche 24 und eine Schnecken 15 mit einer Schneckenrotationsachse 23 sowie eine auf. Die Schnecke 14 des Einschneckenextruder 3 umfasst dabei einen Schneckenkern 29 mit einer Außenfläche 25 und mehrere Schneckensegmente 28 mit Schneckenflügeln 30.

Die Zahnradpumpe 6 weist zwei Zahnräder, welche in Richtung 22 rotieren, auf und folgt in Figur 1 auf den Einschneckenextruder 5. Final wird die devulkanisierte Kautschukmischung 8 von der Zahnradpumpe 6 durch die Filtereinheit 7 gedrückt.

Der in Figur 1 gezeigte Aufbau weist gegen über den in den Figuren 2 und 3 aufgezeigten Aufbau eine größere Temperaturkontrolle und eine automatisierbarere Produktion auf. Letzteres ist insbesondere für kontinuierliche Verfahren vorteilhaft.

Figur 2 zeigt eine schematische Darstellung einer Vorrichtung 1 in einer weiteren Ausführungsform, wobei im Unterschied zu Figur 1 die devulkanisierte Kautschukmischung 8 durch eine Düse 9 am Ende des Zweischneckenextruders 3 gedrückt wird und anschließend über einen weiteren Hopper 12 dem Einschneckenextruder 5 zugeführt wird. Ein Vorteil dieses Aufbaus ist, dass weiterer Kautschukmischungsbestandteile wie beispielsweise Weichmacher oder Füllstoffe hinzugefügt werden können, um die Scherkräfte im Einschneckenextruder zu verringern bzw. zu erhöhen und somit eine optimales Temperaturprofil entlang der Schnecke des Einschneckenextruders zur Schonung der Kautschuk-Polymerketten zu erreichen. Der Zweischneckenextruder 3 weist eine finale Düse 9, einen Zylinder 18 mit einer Innenfläche 24, zwei Schnecken 14 mit je einer Schneckenrotationsachse 23 sowie eine Zu- und Abführreinheit 16, 17 auf. Die Schnecken 14 des Zweischneckenextruder 3 umfasst dabei einen Schneckenkern 29 mit einer Außenfläche 25 und mehrere Schneckensegmente 28 mit Schneckenflügeln 30. Zudem ist der Abstand 26 eingezeichnet, welcher den Parameter h in Formel 1 darstellt.

Der Einschneckenextruder 5 weist einen weiteren Hopper 12, einen Zylinder 19 mit einer Innenfläche 24 und eine Schnecken 15 mit einer Schneckenrotationsachse 23 sowie eine auf. Die Schnecke 14 des Einschneckenextruder 3 umfasst dabei einen Schneckenkern 29 mit einer Außenfläche 25 und mehrere Schneckensegmente 28 mit Schneckenflügeln 30. Die Zahnradpumpe 6 weist zwei Zahnräder, welche in Richtung 22 rotieren, auf und folgt in Figur 2 auf den Einschneckenextruder 5. Final wird die devulkanisierte Kautschukmischung 8 von der Zahnradpumpe 6 durch die Filtereinheit 7 gedrückt.

Figur 3 zeigt eine schematische Darstellung einer Vorrichtung 1 in einer weiteren Ausführungsform, wobei im Unterschied zu Figur 1 die devulkanisierte Kautschukmsichung 8 nicht einen Einschneckenextruder passiert, sondern direkt aus dem Zweischneckenextruder 3 über eine sogenannte Materialschlaufe 13 in die Zahnradpumpe 6 überführt wird. Das Einstellen der Materialschlaufe 13 wird mit einer bekannten Schlaufeneinheit 27 zum Bilden einer Materialschlaufe 13 und zum Einstellen der Länge der Materialschlaufe 13, auch Zwischenspeicher für ein Kautschukmischungsband, erreicht.

Der Vorteil der Materialschlaufe 13 ist, dass je nach Länge der Materialschlaufe 13 die Temperatur beim Eintritt in die Zahnradpumpe 6 genau bestimmt werden kann und somit eine bessere Temperaturkontrolle und insbesondere das Einhalten der Temperaturen im Bereich von 50 °C bis 100 °C in Schritt D) des erfindungsgemäßen Verfahrens garantiert werden kann.

Ein Vorteil dieses Aufbaus ohne Einschneckenextruder ist, dass durch die Wahl der Schlaufenlänge die genaue Temperatur der aus dem Zweischneckenextruder kommenden Kautschukmischung schnell auf den jeweiligen Prozess oder die jeweilige zu devulkanisierende Kautschukmischung eingestellt werden kann und somit zu wenig Standzeiten bei einem kontinuierlichen Verfahren in einer Vorrichtung führt.

Der Zweischneckenextruder 3 weist einen Zylinder 18 mit einer Innenfläche 24, zwei Schnecken 14 mit je einer Schneckenrotationsachse 23 sowie eine Zu- und Abführreinheit 16, 17 auf. Die Schnecken 14 des Zweischneckenextruder 3 umfasst dabei einen Schneckenkern 29 mit einer Außenfläche 25 und mehrere Schneckensegmente 28 mit Schneckenflügeln 30. Zudem ist der Abstand 26 eingezeichnet, welcher den Parameter h in Formel 1 darstellt.

Die Zahnradpumpe 6 weist zwei Zahnräder, welche in Richtung 22 rotieren, auf und folgt in Figur 3 auf die Schlaufeneinheit 27. Final wird die devulkanisierte Kautschukmischung 8 von der Zahnradpumpe 6 durch die Filtereinheit 7 gedrückt.

**Experimentelle Beispiele:**

Messmethoden:

1. Mooney-Viskosität
Die Ergebnisse wurden in Anlehnung an die Methode DIN 53523 (ML1+3) bei 100 °C ermittelt (Mooney-Einheiten M.E.).

2. Shore A-Härte
Die Ergebnisse wurden in Anlehnung an die Methode DIN bei Raumtemperatur mittels Durometer gemäß DIN ISO 7619-1 ermittelt.

3. Resilience/ Rückprallelastizität

Die Ergebnisse wurden in Anlehnung an die Methode DIN 53 512 bei Raumtemperatur ermittelt.

4. Modul 300

Die Ergebnisse zum Spannungswert wurden in Anlehnung an die Methode DIN 53 504 bei 300% statischer Dehnung bei Raumtemperatur ermittelt.

5. Maximaler (max) Verlustfaktor tan δ (tangens delta)

Die Ergebnisse wurden in Anlehnung an die Methode DIN 53 513 aus dynamischmechanischer Messung ermittelt, Dehnungsdurchlauf (engl. "strain sweep") bei 55 °C.

Herstellung:

Herstellung einer erfindungsgemäß und nicht erfindungsgemäß devulkanisierten Kautschukmischung:
Die Herstellung der devulkanisierten Kautschukmischung erfolgte in den Schritten B), C) und D). In dem ersten Verfahrensschritte B) wurde Gummi aus alten LkW-Reifen-Laufstreifen mithilfe einer Partikelzerkleinerungseinheit in vulkanisierte Kautschukpartikel mit einem maximalen Partikeldurchmesser und mit einem durchschnittlichen Partikeldurchmesser wie in Tabelle A gezeigt zerkleinern. Anschließend wurden die so zerkleinerten Kautschukpartikel mithilfe einer Vorrichtung, wie sie in Figur 1 gezeigt ist, zu einer devulkanisierten Kautschukmischung verarbeitet. Dabei wurden in dem Einschnecken- und Zweischneckenextruder die in Tab. A gezeigten Parameter eingestellt. Dabei wurde so verfahren, dass die im Zweischneckenextruder extrudierte Kautschukmischung im Einschneckenextruder und in der Zahnradpumpe keine höhere Scherkräfte erfuhr als im Zweischneckenextruder. Tabelle A: Experimentelle Daten der erfindungsgemäß und nicht erfindungsgemäß hergestellten Devulkanisate VD1, ED1 und ED2 in einer beschriebenen Vorrichtung

Tabelle A

| Bezeichnung | | VD1 | ED1 | ED2 |
|---|---|---|---|---|
| Eigenschaft | | Nicht erfind.-gemäß | Erfind.-gemäß | Erfind.-gemäß |
| **Parameter** | | | | |
| **Zweischneckenextruder** | **Einheit** | | | |
| Temperatur im Zylinder | °C | 250 | 170 | 130 |
| Scherkräfte | 1/s | 80 | 80 | 80 |
| | | | | |
| **Einschneckenextruder** | | | | |
| Temperatur beim Austritt | °C | 150 | 94 | 86 |
| **Eigenschaften** | | | | |
| | | | | |
| **Kautschukpartikel** | | | | |
| Durchschnittliche Partikelgröße | mm | 2 | 2 | 2 |
| maximale Partikelgröße | mm | 5 | 5 | 5 |

Herstellung der Probekörper:

Die Herstellung der devulkanisierten Kautschukmischung VD 1, ED 1 und ED 2 erfolgt nach dem vorstehend beschriebenen erfindungsgemäßen Verfahren. Durch Zugabe von NR, BR, SBR, der jeweiligen devulkanisierten Kautschukmischung und weiterer Zusatzstoffe wie in Tabelle 1 angegeben in einen Mischer in einer ersten Mischstufe und durch anschließender Zugabe des Vulkanisationssystems in einer zweiten Mischstufe wird die Fertigmischung erzeugt.

Anschließend erfolgt die Weiterverarbeitung durch Vulkanisation der Fertigmischung, wobei aufgrund des im Rahmen der vorliegenden Erfindung zugegebenen Vulkanisationssystems eine Schwefelvernetzung stattfindet. Die Vulkanisation der Fertigmischung erfolgte bei 160 °C während 12 min.

Ergebnisse:

Tabelle 1: Experimentelle Daten der Kautschukzusammensetzung für die erfindungsgemäßen Versuche E2 und E3 und den nicht erfindungsgemäßen Vergleichsversuch V1

Tabelle 1

| Bestandteil | Einheit | Mischstufe | Vgl.-Exp. V1 | Exp. E2 | Exp. E3 |
|---|---|---|---|---|---|
| | | | Nicht erfind.-gemäß | Erfind.-gemäß | Erfind.-gemäß |
| NR | phr | 1 | 50 | 50 | 50 |
| BR | phr | 1 | 20 | 20 | 20 |
| SBR | phr | 1 | 30 | 30 | 30 |
| Devulkanisat VD 1 | phr | 1 | 40 | --- | --- |
| Devulkanisat ED 1 | phr | 1 | --- | 40 | --- |
| Devulkanisat ED 2 | phr | 1 | --- | --- | 40 |
| Ruß | phr | 1 | 30 | 30 | 30 |
| Weichmacher | phr | 1 | 15 | 15 | 15 |
| Alterungsschutzmittel | phr | 1 | 4,5 | 4,5 | 4,5 |
| Stearinsäure | phr | 1 | 2 | 2 | 2 |
| ZnO | phr | 1 | 2.5 | 2.5 | 2.5 |
| Schwefel | phr | 2 | 2.5 | 2.5 | 2.5 |
| Vulkanisationsmittel | phr | 2 | 1,4 | 1,4 | 1,4 |

Tabelle 2: Experimentelle Daten der die erfindungsgemäß und nicht erfindungsgemäß hergestellten Devulkanisate umfassenden Kautschukfertigmischung und der daraus nach Vulkanisation resultierenden Probekörper

Tabelle 2

| Eigenschaft | Einheit | Vgl.-Exp. V1 | Exp. E1 | Exp. E2 |
|---|---|---|---|---|
| | | Nicht erfind.-gemäß | Erfind.-gemäß | Erfind.-gemäß |
| **Kautschukfertigmischung** | | **V1** | **E1** | **E2** |
| Mooney (ML1+3) | MU | 32 | 34 | 36 |
| | | | | |
| **Probekörper der vulkanisierten Fertigmischung** | | | | |
| Shore A Härte @ RT | ShA | 48,8 | 49,1 | 49,5 |
| Resilience @RT | % | 45,8 | 47,4 | 48,3 |
| Modul 300 @RT | MPa | 4,8 | 5,3 | 5,4 |
| tan d (max) | - | 0,123 | 0,113 | 0,111 |

Die experimentellen Daten aus Tab. 2 zeigen, dass die Temperaturkontrolle und das Einhalten der Größe der verwendeten vulkanisierten Kautschukpartikel und der niedrigen Schergeschwindigkeiten eine wichtige Rolle spielen, um die Polymerketten der Kautschukmoleküle beim Devulkanisieren möglichst wenig zu verkürzen.. Die Kautschukfertigmischung, die das Devulkanisat ED1 enthält, weist höhere Mooney-Viskosität auf und nach der Vulkanisation eine höhere Rückplrallelastizität, ein höheres Modul 300 und einen niedrigen Verlustfaktor Tan d (max) bei nahezu gleicher Shore A Härte. Diese Unterschiede konnten zudem nochmal gesteigert werden, wenn im Zweischneckenextruder des Versuchsaufbaus nicht nur eine Temperatur von 170°, sondern eine maximale Temperatur 130 °C eingehalten wurde (vgl. Exp. 2 mit Exp. 3). Dies zeigt, dass die Kettenlängen der devulkanisierten Kautschukmischung, welche im erfindungsgemäßen Experiment Exp. 3 erhalten wurden, noch länger waren als solche der devulkanisierten Kautschukmischung gemäß dem erfindungsmäßen Experiment Exp. 2.

**Bezugszeichenliste:**

| | |
|---|---|
| 1 | Vorrichtung |
| 2 | vulkanisierte Kautschukpartikel; vulkanisierte Kautschukpartikel mit einem maximalen Partikeldurchmesser von 100 mm und mit einem durchschnittlichen Partikeldurchmesser von 0,1 mm bis 20 mm |
| 3 | Zweischneckenextruder |
| 4 | weitere Kneteinheit |
| 5 | Einschneckenextruder |
| 6 | Zahnradpumpe |
| 7 | Filtereinheit umfassend ein Sieb und eine Lochplatte; Strainer |
| 8 | devulkanisierte Kautschukmischung |
| 9 | Düse am Ende des Zweischneckenextruders |
| 10 | Hopper zum Zuführen von vulkanisierten Kautschukpartikeln in einen Zweischneckenextruder |
| 11 | Partikelzerkleinerungseinheit zum Zerkleinern einer vulkanisierten Kautschukmischung in ein Granulat aus vulkanisierten Kautschukpartikeln mit einem maximalen Partikeldurchmesser von 100 mm und mit einem durchschnittlichen Partikeldurchmesser im Bereich von 0,1 mm bis 20 mm |
| 12 | weiterer Hopper zum Zuführen von vulkanisierten Kautschukpartikeln in einen Einschneckenextruder |
| 13 | Materialschlaufe aus devulkanisierter Kautschukmischung |
| 14 | Schnecke eines Zweischneckenextruder |
| 15 | Schnecke eines Einschneckenextruder |
| 16 | Zuführungseinheit zum Zuführen eines Mittels zum Temperieren der extrudierten Kautschukpartikel in den Zweischneckenextruder |
| 17 | Abführungseinheit zum Abführen eines hinzugefügten Mittels zum Temperieren der extrudierten Kautschukpartikel aus dem Zweischneckenextruder |
| 18 | Zylinder eines Zweischneckenextruder |
| 19 | Zylinder eines Einschneckenextruder |
| 20 | Extrusionsrichtung; Produktionsrichtung |
| 21 | Zahnräder der Zahnradpumpe |
| 22 | Rotationsrichtung der Zahnräder der Zahnradpumpe |
| 23 | Schneckenrotationsachse |
| 24 | Innenfläche des Extrusionszylinders |
| 25 | Außenfläche des Schneckenkerns |
| 26 | Abstand in einer zur Schneckenrotationsachse senkrecht verlaufenden Querschnitt zwischen der Innenfläche des Extrusionszylinders und der Außenfläche des Schneckenkerns |
| 27 | Schlaufeneinheit zum Bilden einer Materialschlaufe und zum Einstellen der Länge der Materialschlaufe; Zwischenspeicher für ein Kautschukmischungsband |
| 28 | Schneckensegment im Extruder |
| 29 | Schneckenkern |
| 30 | Schneckenflügel; Schneckensteg |

**Patentansprüche**

1. Verfahren zur Devulkanisation einer vulkanisierten Kautschukmischung, umfassend die folgenden Schritte

A) Bereitstellen oder Herstellen einer vulkanisierten Kautschukmischung,
B) Zerkleinern der vulkanisierten Kautschukmischung in ein Granulat aus vulkanisierten Kautschukpartikeln (2), wobei die vulkanisierten Kautschukpartikel (2) einen maximalen Partikeldurchmesser von 100 mm aufweisen,
C) Extrudieren der in Schritt B) hergestellten vulkanisierten Kautschukpartikel (2) in einem Zweischneckenextruder (3) mit einer Schergeschwindigkeit von weniger als 100 s$^{-1}$, wobei die Temperatur der vulkanisierten Kautschukpartikel (2) während des Extrudierens kleiner ist als 200 °C und eine devulkanisierte Kautschukmischung (8) mit einer Temperatur von über 100 °C entsteht,
D) Abkühlen der devulkanisierten Kautschukmischung (8) in einer weiteren Kneteinheit (4), sodass eine devulkanisierte Kautschukmischung (8) mit einer Temperatur im Bereich von 50 °C bis 100 °C entsteht,

E) wobei zeitlich nach dem Schritt D) die devulkanisierte Kautschukmischung (8) auf eine Temperatur von 100 °C bis 150 °C erwärmt wird und anschließend mit anderen Kautschukmischungen vermischt wird.

2. Verfahren nach dem vorangegangenen Anspruch, wobei während des Extrudierens in Schritt C) ein spezifischer Energieeintrag von 0,01 bis 5 kWh/kg je Schnecke (14) in die vulkanisierten Kautschukpartikel (2) eingetragen wird, bezogen auf die Gesamtmasse der in Schritt C) extrudierten vulkanisierten Kautschukpartikel (2), bevorzugt 0,1 bis 2,5 kWh/kg je Schnecke.

3. Verfahren nach einem der vorangehenden Ansprüche, wobei die weitere Kneteinheit (4) in Schritt D) einen Einschneckenextruder (5) und/oder eine Zahnradpumpe (6) umfasst.

4. Verfahren nach einem der vorangehenden Ansprüche, wobei die devulkanisierte Kautschukmischung (8) in dem Schritt E),
durch eine Filtereinheit (7) umfassend ein Sieb und/oder eine Lochplatte gedrückt wird, wobei die devulkanisierte Kautschukmischung (8) bevorzugt aufgrund des Drückens durch die Filtereinheit (7) eine Temperatur von 50 °C bis 150 °C erwärmt wird, bevorzugt von 100°C bis 150 °C.

5. Verfahren nach einem der vorangehenden Ansprüche, wobei während des Extrudierens in Schritt C) ein Mittel zum Temperieren der extrudierten Kautschukpartikel (2) in den Zweischneckenextruder (3) hinzugefügt wird, wobei das Mittel zum Temperieren der extrudierten Kautschukpartikel (2) bevorzugt chemisch nicht im Temperaturbereich zwischen 10 °C und 200 °C mit den Kautschukpartikeln (2) reagiert.

6. Verfahren nach einem der vorangehenden Ansprüche, wobei während des Extrudierens in Schritt C) das Mittel zum Temperieren der extrudierten Kautschukpartikel (2) einen spezifischen Wärmeübergangskoeffizienten nach EN ISO 6946 im Bereich von 100 bis 5000 W/(m$^2$*K) und/oder der spezifischen Wärmekapazität im Bereich von 3 bis 5 kJ/(kg·K) aufweist.

7. Verfahren nach einem der vorangehenden Ansprüche, wobei während des Extrudierens in Schritt C) die Schneckendrehzahl der Schnecken (14) des Zweischneckenextruders (3) zumindest hauptsächlich im Bereich von 10 bis 500 Umdrehung pro Minute liegt, bevorzugt im Bereich von 100 bis 300 Umdrehung pro Minute.

8. Verfahren nach einem der vorangehenden Ansprüche, wobei

- die in Schritt B) hergestellten vulkanisierten Kautschukpartikel (2) in Schritt C) in dem Zweischneckenextruder (3) mit einer Schergeschwindigkeit im Bereich von 10 bis 80 s$^{-1}$ extrudiert werden
und/oder
- der Zweischneckenextruder (3) in Schritt C) eine Länge von weniger als 60D aufweist.

9. Verfahren nach einem der vorangehenden Ansprüche, wobei die Temperatur der vulkanisierten Kautschukpartikel (2) während des Extrudierens in Schritt C) im Bereich von 105 bis 180 °C liegt, bevorzugt im Bereich von 110 bis 150 °C.

10. Verfahren nach einem der vorangehenden Ansprüche, wobei der Anteil der in Schritt B) resultierenden zerkleinerten Kautschukpartikel (2), welcher bei einem Siebtest nach dem japanischen Industriestandards JIS P-8207 durch ein Sieb von 44 Mesh tritt, mindestens 50 Gew.-% der Gesamtmasse an in Schritt B) resultierenden zerkleinerten Kautschukpartikel (2) umfasst, bevorzugt mindestens 80 Gew.-% der Gesamtmasse an in Schritt B) resultierenden zerkleinerten Kautschukpartikel (2).

11. Verfahren nach einem der vorangehenden Ansprüche, wobei der durchschnittliche Partikeldurchmesser der in Schritt B) resultierenden Kautschukpartikel (2) im Bereich von 0,01 mm bis 50 mm liegt, bevorzugt im Bereich von 0,1 mm bis 20 mm.

12. Verfahren nach einem der vorangehenden Ansprüche, wobei die in Schritt A) her- oder bereitgestellte Kautschukmischung

- aus natürlichem Kautschuk, Butadienkautschuk und/oder SBR-Kautschuk besteht, wobei in der in Schritt A) her- oder bereitgestellte Kautschukmischung bevorzugt 50 phr bis 100 phr eines natürlichen Kautschuks vorliegen
und/oder

- einen Füllstoff, bevorzugt Ruß, umfasst, wobei der Füllstoff bevorzugt in einer Menge von 10 bis 150 phr, besonders bevorzugt in einer Menge von 70 bis 150 phr vorliegt.

**13.** Verfahren zur Bereitstellung und Verwendung einer Kautschukmischung umfassend die Schritte:

- Bereitstellen einer devulkanisierten Kautschukmischung nach einem der Ansprüche 1 bis 12 und
- Verwendung der Kautschukmischung zur Herstellung eines technischen Gummiartikels, bevorzugt eines Fahrzeugreifens.

**Claims**

1. Process for devulcanizing a vulcanized rubber mixture, comprising the following steps:

   A) providing or producing a vulcanized rubber mixture,
   B) comminuting the vulcanized rubber mixture to a granular material composed of vulcanized rubber particles (2), where the vulcanized rubber particles (2) have a maximum particle diameter of 100 mm,
   C) extruding the vulcanized rubber particles (2) produced in step B) in a twin-screw extruder (3) at a shear rate of less than $100\,s^{-1}$, where the temperature of the vulcanized rubber particles (2) during extrusion is less than 200°C, to give a devulcanized rubber mixture (8) having a temperature above 100°C,
   D) cooling the devulcanized rubber mixture (8) in a further kneading unit (4), so as to give a devulcanized rubber mixture (8) having a temperature in the range from 50°C to 100°C,
   E) wherein, after step D), the devulcanized rubber mixture (8) is heated to a temperature of 100°C to 150°C and then mixed with other rubber mixtures.

2. Process according to the preceding claim, wherein, during the extruding in step C), a specific energy input of 0.01 to 5 kWh/kg per screw (14) is introduced into the vulcanized rubber particles (2), based on the total mass of the vulcanized rubber particles (2) extruded in step C), preferably 0.1 to 2.5 kWh/kg per screw.

3. Process according to either of the preceding claims, wherein the further kneading unit (4) in step D) comprises a single-screw extruder (5) and/or a gear pump (6).

4. Process according to any of the preceding claims, wherein the devulcanized rubber mixture (8) in step E) is pushed through a filter unit (7) comprising a sieve and/or a perforated plate, wherein the devulcanized rubber mixture (8), on account of the pushing through the filter unit (7), is preferably heated to a temperature of 50°C to 150°C, preferably of 100°C to 150°C.

5. Process according to any of the preceding claims, wherein, during the extruding in step C), a means of controlling the temperature of the extruded rubber particles (2) is added to the twin-screw extruder (3), wherein the means of controlling the temperature of the extruded rubber particles (2) preferably does not react chemically with the rubber particles (2) within the temperature range between 10°C and 200°C.

6. Process according to any of the preceding claims, wherein, during the extruding in step C), the means of controlling the temperature of the extruded rubber particles (2) has a specific heat transfer coefficient to EN ISO 6946 in the range from 100 to 5000 $W/(m^2\text{*}K)$ and/or a specific heat capacity in the range from 3 to 5 kJ/(kg-K).

7. Process according to any of the preceding claims, wherein, during the extruding in step C), the screw speed of the screws (14) of the twin-screw extruder (3) is at least mainly within the range from 10 to 500 revolutions per minute, preferably in the range from 100 to 300 revolutions per minute.

8. Process according to any of the preceding claims, wherein

   - the vulcanized rubber particles (2) produced in step B) are extruded in step C) in the twin-screw extruder (3) at a shear rate in the range from 10 to 80 $s^{-1}$
   and/or
   - the twin-screw extruder (3) in step C) has a length of less than 60D.

9. Process according to any of the preceding claims, wherein the temperature of the vulcanized rubber particles (2) during the extruding in step C) is in the range from 105 to 180°C, preferably in the range from 110 to 150°C.

10. Process according to any of the preceding claims, wherein the resulting proportion of comminuted rubber particles (2) in step B) that passes through a 44 mesh sieve in a sieving test according to Japanese industrial standard JIS P-8207 is at least 50% by weight of the resulting total mass of comminuted rubber particles (2) in step B), preferably at least 80% by weight of the resulting total mass of comminuted rubber particles (2) in step B).

11. Process according to any of the preceding claims, wherein the average particle diameter of the resulting rubber particles (2) in step B) is in the range from 0.01 mm to 50 mm, preferably in the range from 0.1 mm to 20 mm.

12. Process according to any of the preceding claims, wherein the rubber mixture produced or provided in step A)

   - consists of natural rubber, butadiene rubber and/or SBR rubber, where there is preferably 50 phr to 100 phr of a natural rubber in the rubber mixture produced or provided in step A),
   and/or
   - comprises a filler, preferably carbon black, where the filler is present preferably in an amount of 10 to 150 phr, more preferably in an amount of 70 to 150 phr.

13. Process for providing and using a rubber mixture, comprising the steps of:

   - providing a devulcanized rubber mixture according to any of Claims 1 to 12
   and
   - using the rubber mixture for the production of an industrial rubber article, preferably a vehicle tyre.

**Revendications**

1. Procédé de dévulcanisation d'un mélange de caoutchouc vulcanisé, comprenant les étapes suivantes

   A) fourniture ou fabrication d'un mélange de caoutchouc vulcanisé,
   B) broyage du mélange de caoutchouc vulcanisé en un granulat de particules de caoutchouc (2) vulcanisées, les particules de caoutchouc (2) vulcanisées présentant un diamètre maximal de particule de 100 mm,
   C) extrusion des particules de caoutchouc (2) vulcanisées fabriquées dans l'étape B) dans une extrudeuse à double vis sans fin (3) à une vitesse de cisaillement inférieure à 100 s$^{-1}$, la température des particules de caoutchouc (2) vulcanisées étant inférieure pendant l'extrusion à 200 °C et un mélange de caoutchouc dévulcanisé (8) avec une température supérieure à 100 °C étant obtenu,
   D) refroidissement du mélange de caoutchouc dévulcanisé (8) dans une unité de malaxage (4) supplémentaire si bien qu'un mélange de caoutchouc dévulcanisé (8) avec une température dans la plage de 50 °C à 100 °C est obtenu,
   E) le mélange de caoutchouc dévulcanisé (8) étant réchauffé, chronologiquement après l'étape D), à une température de 100 °C à 150 °C puis étant mélangé à d'autres mélanges de caoutchouc.

2. Procédé selon la revendication précédente, un apport en énergie spécifique de 0,01 à 5 kWh/kg par vis sans fin (14) étant apporté dans les particules de caoutchouc (2) vulcanisées pendant l'extrusion dans l'étape C) par rapport à la masse totale des particules de caoutchouc (2) vulcanisées extrudées dans l'étape C), de manière préférée de 0,1 à 2,5 kWh/kg par vis sans fin.

3. Procédé selon l'une des revendications précédentes, l'unité de malaxage (4) supplémentaire comprenant dans l'étape D) une extrudeuse à vis sans fin simple (5) et/ou une pompe à engrenages (6).

4. Procédé selon l'une des revendications précédentes, le mélange de caoutchouc dévulcanisé (8) étant dans l'étape E) étant pressé par une unité filtrante (7) comprenant une plaque de tamisage et/ou une plaque perforée, le mélange de caoutchouc dévulcanisé (8) étant réchauffé de manière préférée, en raison de la pression par l'unité filtrante (7), à une température de 50 °C à 150 °C, de manière préférée de 100 °C à 150 °C.

5. Procédé selon l'une des revendications précédentes, un moyen de thermorégulation des particules de caoutchouc (2) extrudées étant ajouté dans l'extrudeuse à double vis sans fin (3) pendant l'extrusion dans l'étape C), le moyen de thermorégulation des particules de caoutchouc (2) extrudées ne réagissant pas chimiquement avec les particules de caoutchouc (2) dans la plage de températures entre 10 °C et 200 °C.

6. Procédé selon l'une des revendications précédentes, le moyen de thermorégulation des particules de caoutchouc (2) extrudées présentant, pendant l'extrusion dans l'étape C), un coefficient de transfert thermique spécifique selon la norme EN ISO 6946 dans la plage de 100 à 5000 W/(m$^2$*K) et/ou la capacité thermique spécifique dans la plage de 3 à 5 kJ/(kg K).

7. Procédé selon l'une des revendications précédentes, la vitesse de rotation de vis sans fin des vis sans fin (14) de l'extrudeuse à double vis sans fin (3) étant située, pendant l'extrusion dans l'étape C), au moins principalement dans la plage de 10 à 500 tours par minute, de manière préférée dans la plage de 100 à 300 tours par minute.

8. Procédé selon l'une des revendications précédentes,

   - les particules de caoutchouc (2) vulcanisées fabriquées dans l'étape B) étant extrudées dans l'étape C), à une vitesse de cisaillement dans la plage de 10 à 80 s$^{-1}$ dans l'extrudeuse à double vis sans fin (3)
   et/ou
   - l'extrudeuse à double vis sans fin (3) présentant dans l'étape C) une longueur inférieure à 60D.

9. Procédé selon l'une des revendications précédentes, la température des particules de caoutchouc (2) vulcanisées étant située pendant l'extrusion dans l'étape C) dans la plage de 105 à 180 °C, de manière préférée dans la plage de 110 à 150 °C.

10. Procédé selon l'une des revendications précédentes, la proportion des particules de caoutchouc (2) broyées résultant dans l'étape B), laquelle se produit lors d'un test de tamisage selon la norme industrielle japonaise JIS P-8207 à travers un tamis de maille 44, comprenant au moins 50 % en poids de la masse totale en particules de caoutchouc (2) broyées résultant dans l'étape B), de manière préférée au moins 80 % en poids de la masse totale en particules de caoutchouc (2) broyées résultant dans l'étape B).

11. Procédé selon l'une des revendications précédentes, le diamètre moyen de particule des particules de caoutchouc (2) résultant dans l'étape B) étant situé dans la plage de 0,01 mm à 50 mm, de manière préférée dans la plage de 0,1 mm à 20 mm.

12. Procédé selon l'une des revendications précédentes, le mélange de caoutchouc fabriqué ou fourni dans l'étape A)

   - étant constitué de caoutchouc naturel, de caoutchouc de butadiène et/ou de caoutchouc styrène-butadiène, de manière préférée 50 phr à 100 phr d'un caoutchouc naturel étant contenus dans le mélange de caoutchouc fabriqué ou fourni lors de l'étape A)
   et/ou
   - comprenant une charge, de manière préférée de la suie, la charge étant contenue de manière préférée en une quantité de 10 à 150 phr, de manière particulièrement préférée en une quantité de 70 à 150 phr.

13. Procédé de fourniture et d'utilisation d'un mélange de caoutchouc comprenant les étapes :

   - fourniture d'un mélange de caoutchouc dévulcanisé selon l'une des revendications 1 à 12, et
   - utilisation du mélange de caoutchouc pour la fabrication d'un article technique en gomme, de manière préférée d'un pneumatique de véhicule.

Fig. 1

Fig. 2

**Fig. 3**

**IN DER BESCHREIBUNG AUFGEFÜHRTE DOKUMENTE**

**In der Beschreibung aufgeführte Patentdokumente**

- CN 105729755
- CN 102250381 B
- US 2015148435 A
- EP 1201390 A
- CN 102344592 A
- US 7189762 B2
- DE 102015224957 A1
- CN 108822337 A
- US 2018251624 A1
- EP 2601249 A1
- DE 102017216544 A1